(19) Europäisches Patentamt

European Patent Office

Office européen des brevets

(11) **EP 1 666 922 A1**

(12) **EUROPEAN PATENT APPLICATION**

(43) Date of publication:
**07.06.2006 Bulletin 2006/23**

(51) Int Cl.:
***G01V 3/08*** (2006.01)

(21) Application number: **06005246.1**

(22) Date of filing: **17.07.2000**

| | |
|---|---|
| (84) Designated Contracting States:<br>**AT BE CH CY DE DK ES FI FR GB GR IE IT LI LU MC NL PT SE**<br>Designated Extension States:<br>**AL LT LV MK RO SI** | (72) Inventors:<br>• **McDonnell, Judson G.**<br>**Farmington Hills, MI 48331 (US)**<br>• **Stanley, James G.**<br>**Novi, MI 48374 (US)** |
| (30) Priority: **15.07.1999 US 144161 P** | (74) Representative: **Smith, Samuel Leonard**<br>**J.A. Kemp & Co.,**<br>**14 South Square,**<br>**Gray's Inn**<br>**London WC1R 5JJ (GB)** |
| (62) Document number(s) of the earlier application(s) in accordance with Art. 76 EPC:<br>**00947401.6 / 1 159 715** | |
| (71) Applicant: **AUTOMOTIVE SYSTEMS LABORATORY, INC.**<br>**(a Michigan corporation)**<br>**Farmington Hills**<br>**Michigan 48331 (US)** | Remarks:<br>This application was filed on 15 - 03 - 2006 as a divisional application to the application mentioned under INID code 62. |

(54) **Method of coupling a capacitance to the input of an operational amplifier**

(57) A method of operatively coupling adding capacitance to an input of an operational amplifier, comprising:
a. operatively coupling a first terminal of a first switch to a first terminal of a second switch at a second node;
b. operatively coupling a first terminal of a capacitor to said second node;
c. operatively coupling a second terminal of said second switch to a first input of an operational amplifier;
d. operatively coupling one of a second terminal of said capacitor and a second terminal of said first switch to a second input of said operational amplifier; whereby said operational amplifier acts to substantially null a potential difference between said first and second inputs, and
e. operatively coupling the other of said second terminal of said capacitor and said second terminal of said first switch to a circuit ground, wherein said capacitor has a capacitance between said first and second terminals of said capacitor, when said first switch is closed and said second switch is open, said capacitance is added to said second input of said operational amplifier, and when said first switch is open and said second switch is closed, said capacitance is not added to said second input of said operational amplifier.

FIG. 1c.

**Description**

In the accompanying drawings:

**FIG. 1a** illustrates a proximity sensor having three control electrodes, and a block diagram of an associated circuit;

**FIG. 1b** illustrates various control states of the proximity sensor of **Fig. 1a;**

**FIG. 2** is a contour plot of the electric field potential for a three plate capacitor in XY Space, for an in-phase (IP) mode of operation;

**FIG. 3** is a plot of the Y-component of the electric field as a function of position along the sense electrode surface of a three plate capacitor for the in-phase (IP) mode of operation illustrated in **Fig. 2;**

**FIG. 4** is a contour plot of the electric field potential for a three plate capacitor in XY Space, for an out-of-phase (OOP) mode of operation;

**FIG. 5** is a plot of the Y-component of the electric field as a function of position along the sense electrode surface of a three plate capacitor for the OOP mode of operation illustrated in **Fig. 4**;

**FIG. 6** is a comparison of the capacitance of a proximity sensor as a function of target distance for various modes of operation;

**FIGs. 7a-f** illustrate various embodiments for switching a calibration capacitor;

**FIG. 8** illustrates a flow chart of the operation a proximity sensor;

**FIG. 9** illustrates various regions of a DeltaCap measure;

**FIG. 10a** illustrates the effect of a dielectric on a proximity sensor operated in an out-of-phase (OP) control mode;

**FIG. 10b** illustrates the effect of a dielectric on a proximity sensor operated in an in-phase (IP) control mode;

**FIG. 11** illustrates the effect of a dielectric on the capacitance of a proximity sensor as a function of distance for an out-of-phase (OP) control mode, with and without an in-phase (IP) guard;

**FIG. 12** illustrates the effect of an in-phase (IP) guard on the capacitance of a proximity sensor for various dielectric objects;

**FIG. 13** illustrates various measures for targets moving closer to and farther from a proximity sensor;

**FIG. 14** illustrates various measures for a dielectric target moving away from a proximity sensor; and

**FIG. 15** illustrates a front-end amplifier with an offset canceling circuit in accordance with the instant invention.

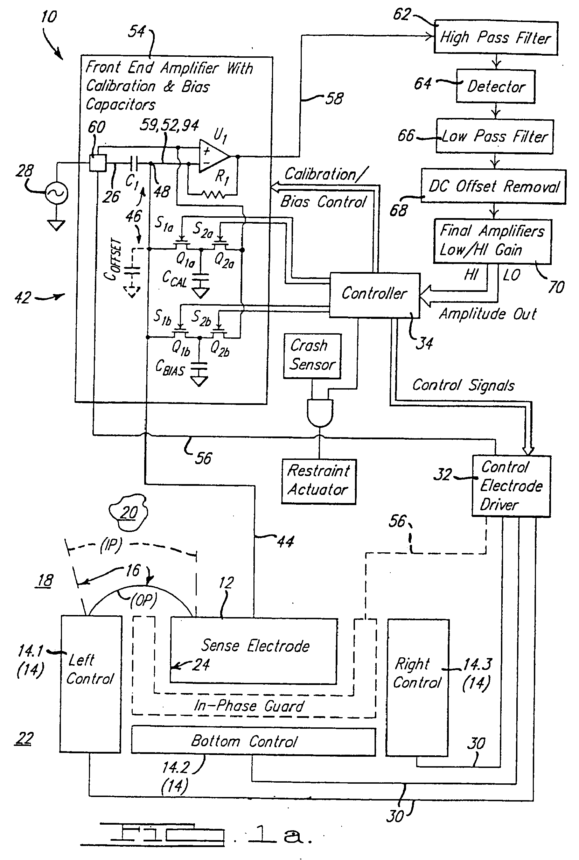

Referring to **Fig. 1a,** a **proximity sensor 10** comprises a conductive **sense electrode 12** -- a first electrode— and at least one conductive **control electrode 14** -- at least one second electrode -- for example a plurality of **control electrodes 14.1, 14.2 and 14.3**, separated from the **sense electrode 12**, so that an **electric field 16** created by the sense electrode 12 and at least one of the **control electrodes 14.1, 14.2 and 14.3** occupies a **region of space 18** within which a proximity of an **electric-field-influencing media 20** is sensed. The **sense 12** and **control electrodes 14.1, 14.2 and 14.3** are, for example, disposed on a common, **surface 22,** wherein the **control electrodes 14.1, 14.2 and 14.3** are disposed outside a **periphery 24** of the **sense electrode 12,** are separated from one another, and at least partially surround the **sense electrode 12.**

A **first oscillatory signal 26** is applied to the **sense electrode 12 by a signal generator** 28. **A second oscillatory signal 3** is applied by **a control electrode driver 32** to the **control electrodes 14.1, 14.2 and 14.3,** whereby a phase of the **second oscillatory signal** 30 relative to the **first oscillatory signal 26** is controlled by a **controller 34.** Referring to **Fig. 1b,** wherein the "+" and "-" signs indicate signals that are respectively in-phase and out-of-phase with respect to the **first oscillatory signal 26** -- the **second oscillatory signal 30** comprises **a state 36** corresponding to the phase of the **second oscillatory signal 30** relative to the **first oscillatory signal 26,** and the **controller 34** controls this state. When in a first **state 38** the **second oscillatory signal 30** has a first phase relative to the **first oscillatory signal 26,** when in a **second state 40** the **second oscillatory signal 30** has a second phase relative to the **first oscillatory signal 26.** For example, with a sinusoidal **first oscillatory signal 26,** in the **first state 38,** the first phase is substantially one hundred eighty (180) degrees so that the **second oscillatory signal 30** is substantially out-of-phase with the **first oscillatory signal 26,** and in the **second state 40,** the second phase is substantially zero (0) degrees so that the **second oscillatory signal 30** is substantially in-phase with the **first oscillatory signal 26.**

A **first circuit 42** operatively coupled to the **sense electrode 12** senses a **response signal 44** from the **sense electrode 12.** The **response signal 44** is responsive to the **first 26** and **second 30 oscillatory signals,** and to a proximity of an **electric-field-influencing media 20** to the **sense electrode 12.** The **response signal 44** is, for example, a current from the **sense electrode 12** responsive to applied voltages of the **first 26** and **second 30 oscillatory signals,** or a voltage responsive to the current. Generally, the **response signal 44** either is used to determine the capacitance of the **sense electrode 12,** or **the response signal 44** is a measure of the capacitance of the **sense electrode 12.**

For example, in the **circuit 36** illustrated in **Fig. 1a,** the **first oscillatory signal 26** comprises a voltage applied to a **voltage divider 46** comprising a **capacitor C1** and the **first electrode 12** wherein one terminal of the **capacitor C1** is operatively coupled to the **first electrode 12** at a **first node 48** and another terminal of the **capacitor C1** is operatively coupled to the **first oscillatory signal 26,** wherein a displacement current flows through **capacitor C1** and the **first electrode 12.** The resulting voltage drop across the **first electrode 12** at the first node 48 is sensed as the **response signal 44.** More particularly, when the **second oscillatory signal 30** is in the **first state 38,** a **third signal 50** is sensed at the **first node 48** responsive to an out-of-phase signal applied to the **control electrodes 14.1, 14.2** and **14.3** and when the **second oscillatory signal 30** is in the **second state 40,** a **fourth signal 52** is sensed at the **first node 48** responsive to an out-of-phase signal applied to the **control electrodes 14.1, 14.2** and **14.3.**

In the exemplary system illustrated in **Fig. 1a** the **signal generator 28** generates a continuous wave sinusoidal signal having a frequency of 100 KHz. The signal generator is operatively coupled to a **front end amplifier 54** comprising the **voltage divider 46** and a **buffer amplifier U1. A buffered first oscillatory signal 56** -- a "buffered" version of the **first oscillatory signal 26 --** is operatively coupled to the **control electrode driver 32,** which generates the **second oscillatory signal 30** that is either in-phase or out-of-phase with respect to the **first oscillatory signal 26,** under digital control of the **controller 34. The output 58** of the **front end amplifier 54** -- at the same frequency as the **signal generator 28 --** increases in amplitude as the capacitance of the **sense electrode 12,** or that of an associated parasitic capacitance, increases. Accordingly, the **output 58** of the **front end amplifier 54** provides a measure of the capacitance that is operatively coupled to the **first node 48.** Furthermore, when the **second oscillatory signal 30** is in the **first state 38** so that the **control electrodes 14.1, 14.2 and 14.3** are driven out-of-phase (OP) with respect to the **sense electrode 12,** the associated **third signal 50** at the **output 58** provides a measure of **out-of-phase capacitance $C_{OP}$** of the **sense electrode 12.** Moreover, when the **second oscillatory signal 30** is in the **second state 40** so that the **control electrodes 14.1, 14.2** and **14.3** are driven in-phase (IP) with respect to the **sense electrode 12,** the associated **fourth signal 52** at the **output 58** provides a measure of **in-phase capacitance $C_{IP}$** of the **sense electrode 12.** The **front end amplifier 54** incorporates a **second circuit 60** -- described more fully hereinbelow -- that partially cancels the associated **offset capacitance $C_{OFFSET}$** so as to enable a higher gain in the **front end amplifier 54,** without saturation which could otherwise result without this cancellation.

The **front end amplifier 54** also incorporates a **calibration capacitor** $C_{CAL}$ that can be operatively coupled in parallel with the **sense electrode 12** by activating FET transistor **Q1a** and deactivating **FET transistor Q2a** for purposes of calibrating the **first circuit 42,** for example to compensate for drift of component values over time or due to temperature variation. The **calibration capacitor $C_{CAL}$** can be decoupled from the **sense electrode 12** by deactivating **FET transistor Q1a** and activating **FET transistor Q2a.** As will be described more fully hereinbelow, this arrangement provides a means for coupling and decoupling a capacitor to the **sense electrode 12** without introducing associated parasitic capacitances of the associated switch elements to the **first node 48.** The associated states of the **FET transistors Q1a** and **Q2a** are mutually exclusive, under digital control, for example by the **controller 34.**

Similarly, the **front end amplifier 54** also incorporates a **bias capacitor $C_{BIAS}$** that can be operatively coupled in parallel with the sense electrode 12 by activating FET **transistor Q1b** and deactivating **FET transistor Q2b** for purposes of augmenting the **in-phase capacitance $C_{IP}$** so that the associated **third signal 50** is of similar magnitude to the **fourth signal 52.** This is useful, because as will be described more fully hereinbelow, the **out-of-phase capacitance $C_{OP}$** is generally of greater magnitude than the **in-phase capacitance $C_{IP}$,** so by making the net capacitance at the **first node 48** similar in both cases, both measurements can be made with the same amplifier gain so as to maximize dynamic range. The **bias capacitor $C_{BIAS}$** can be decoupled from the **sense electrode 12** by deactivating **FET transistor Q1b** and activating **FET transistor Q2b.**

A **high pass filter 62** operatively coupled to the **output 58** of the **front end amplifier 54** filters out base band signals (particularly 60Hz) in the **output 58,** before detection. This is useful because the **detector 64** is essentially a peak detector and cannot distinguish between the envelope signal around the signal at the frequency of the **signal**

**generator 28** and additive signals at the base band. In the exemplary system, the **high pass filter 62** comprises a 2-pole filter with a 10 KHz cut-off frequency.

The **detector 64** is operatively coupled to the output of the **high pass filter 62,** and, for example, comprises a simple diode detector, which is the principal non-linear factor in the circuit. Accordingly, the drive into the detector is preferably maintained at a constant amplitude so as to reduce the effect of this non-linearity.

The output of the **detector 64** is operatively coupled to a **low pass filter 66,** the output from which is operatively coupled to a **DC offset removal circuit 68** which provides for adjustable DC offset removal, for example using an inverting amplifier that sums output from the **low pass filter 66** with the output from a D/A converter under control of a microprocessor. This allows for subsequent DC amplification of the resulting signal. The output of the **DC offset removal circuit 68** is then operatively coupled to an **amplifier 70,** which for example has two different outputs, each with a different associated gain, a low gain output with a gain of 4 and a high gain output with a gain of 20. In the exemplary system, the **low pass filter 66** comprises a 2-pole low pass filter with a 1 KHz cut-off frequency. Moreover each of the output stages provides single pole low pass filtering with a cut-off frequency of 500 Hz.

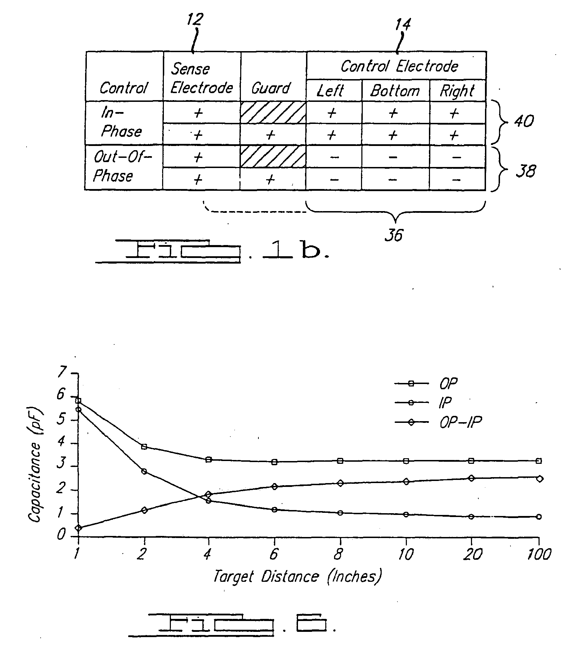

The behavior of the in-phase and out-of-phase modes of operation of an elementary **proximity sensor 10** is illustrated in **Figs. 2-5** which provide the results two dimensional (2-D) electrostatic simulations -- using a 2-D simulation package called Macsyma/PDEase -- of the voltage fields around the **proximity sensor 10** and the electric field intensity at the surface of the **sense electrode 12,** wherein the **sense electrode 12** is **20** cm wide, the **control electrodes 14** on each side thereof are each 10 cm wide and separated therefrom by a **3** cm gap, both the **sense 12** and **control 14** **electrodes** are located at **Y=0** centered about **X=0,** and **+10** Volt is applied to the **sense electrode 12.** The simulation further comprised a grounded **15** cm diameter circular target **(electric-field-influencing media 20)** located **20** cm from the centerline of the **sense electrode 12.**

The **proximity sensor 10** is simulated in the in-phase (IP) mode by applying a **+10** Volt signal to the **control electrodes 14.** Referring to **Fig. 2,** the contours of the contour plot of the associated potential field of the **proximity sensor 10** are largely spherical with the intensity falling off sharply close to the sensor. The field of the three electrodes is substantially identical to that of one large electrode, except that only the capacitance of the **sense electrode 12** portion is actually measured. The boundary conditions of the target forces the voltage to be zero on the surface thereof, thereby increasing the gradient of the potential field, thereby increasing the **electric field 16** and the charge on the **sense electrode 12,** thereby increasing the capacitance thereof.

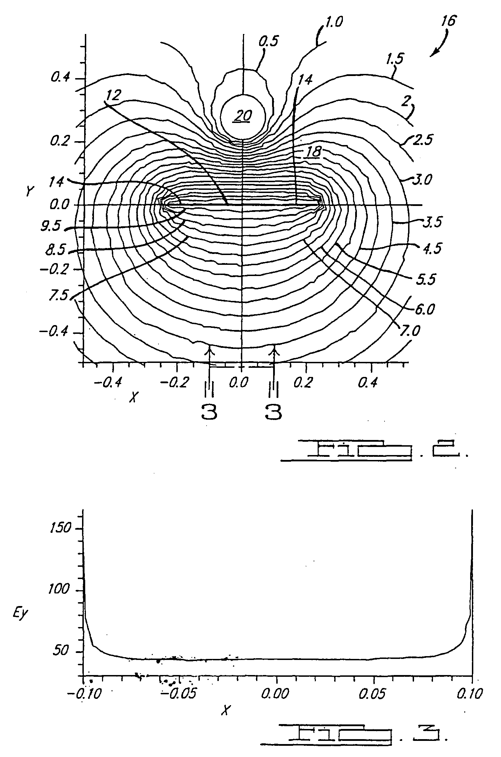

**Fig. 3** illustrates the electric field intensity at the surface of the **sense electrode 12** for the in-phase (IP) mode illustrated in **Fig. 2.** Because the **sense electrode 12** is a conductor, the E-field is perpendicular at the surface thereof, although the direction of the E-field changes as the E-field moves out into free space. Also, the charge distribution on the **sense electrode 12** is proportional (by the dielectric constant) to the normal E-field intensity. Accordingly, **Fig. 3** is also a plot of the charge density on the **sense electrode 12.** The capacitance can be calculated by integrating the charge and dividing by the applied voltage (C = Q / V).

Alternately, the simulation provides the integral of the E-field distribution, from which the **in-phase capacitance $C_{IP}$** of the **sense electrode 12** can be calculated by:

$$C = \frac{\varepsilon_0 Z_{length} \int E_{normal} dA}{V} = 8.854 * 9.262 * .2 / 10 = 1.6pF$$

This assumes that the height of the sensor is 20 cm. The result is approximate because a real 3-D sensor would have edges, and only the capacitance contribution of the top side of the sensor is included.

For capacitive sensors, the charge distribution on the associated electrode is typically U-shaped as shown in **Fig. 3,** which results from the boundary condition that the tangential E-field be zero on the conductor. This smoothing effect makes it difficult to even theoretically get much information about the location and shape of possible targets from the charge distribution. Basically, the charge on the sensor can be broken into two (or four for 3-D cases) edges and a center region. Measuring these three (or five) values could give information about the location of targets. Detailed analysis of the shape of the charge distribution would principally be useful for relatively close targets. The sensor essentially maps the entire complex target space onto this U-shaped distribution.

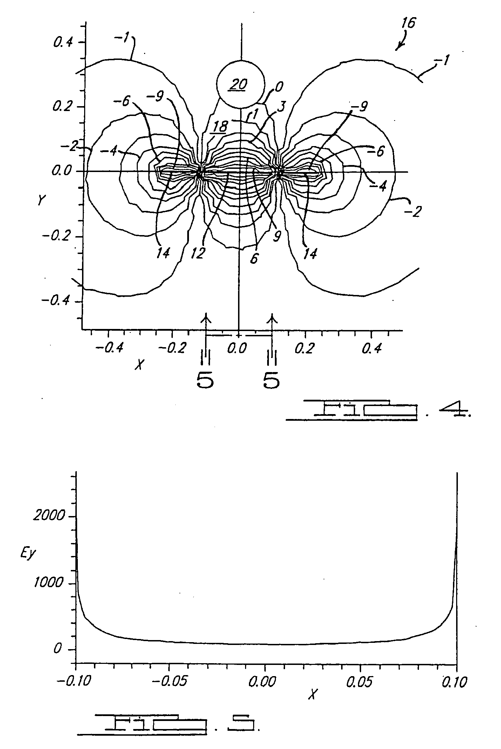

The **proximity sensor 10** is simulated in the out-of-phase (OP) mode by applying a **-10** Volt signal to the **control electrodes 14. Fig. 4** illustrates a contour plot of the potential field for the same geometric configuration as in **Fig. 2,** but with the **control electrodes 14** switched to the out-of-phase (OP) mode. Unlike the in-phase case, in which the contours are largely spherical, the out-of-phase case has a zero voltage interface in the gaps between the **sense 12** and **control 14 electrodes.** The voltages for the out-of-phase (OP) mode cancel relatively close to the proximity sensor 10 so that the potential field does not extend relatively far therefrom, resulting in a relatively short range **proximity sensor 10.** Because the potential falls off sharply, grounded targets **(electric-field-influencing media 20)** would need to be located relatively close to the **proximity sensor 10** in order to have an effect on the associated **electric field 16.** In the configuration of **Fig. 4,** the target is barely disrupting the field and so that its effect on the capacitance of the **sense electrode 12** is relatively small.

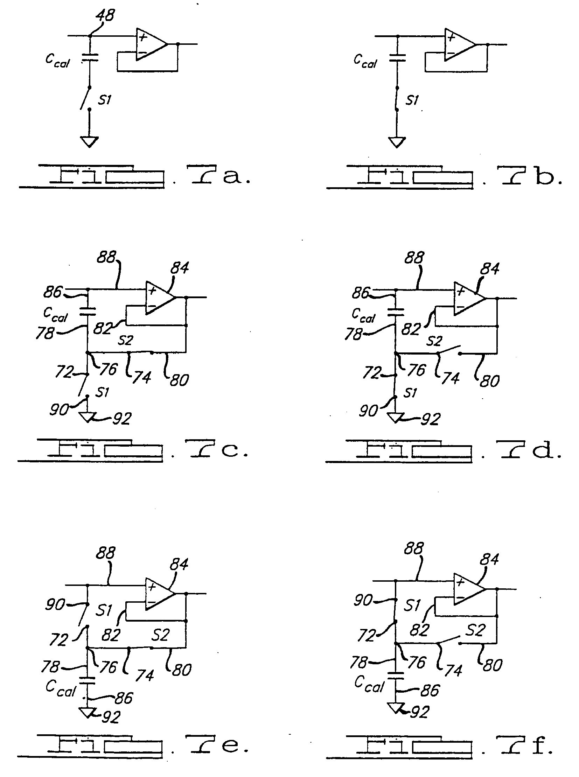

Referring to **Fig. 5,** the E-field and charge distribution for the out-of-phase (OP) mode has a similar U-shape as for the associated in-phase (IP) mode illustrated in **Fig. 3,** but with substantially higher magnitudes, particularly at the edges, because of the high field strengths between the sensor and control electrodes. For the out-of-phase (OP) mode, the maximum E-field at the edge is **2200** V/m, while for the in-phase (IP) mode, the corresponding maximum is only **125** V/m. The E-field strength at the center is about **100** V/m for the out-of-phase (OP) mode, compared with about **40** V/m for the in-phase (IP) mode.

The **out-of-phase capacitance $C_{OP}$** of the **sense electrode 12** is given by:

$$C = \frac{\varepsilon_0 Z_{length} \int E_{normal} dA}{V} \;==\; 8.854 * 36.73 * .2 / 10 = 6.5 \text{ pF}$$

Accordingly, the **out-of-phase capacitance $C_{OP}$** -- about 6.5 pF -- of the **sense electrode 12** is about four times the **in-phase capacitance $C_{IP}$** -- about 1.6 pF. The absolute capacitance of the sensor in the out-of-phase (OP) mode is larger than that of the in-phase (IP) mode, but the in-phase (IP) capacitance increases more sharply as targets become closer to the **sense electrode 12.**

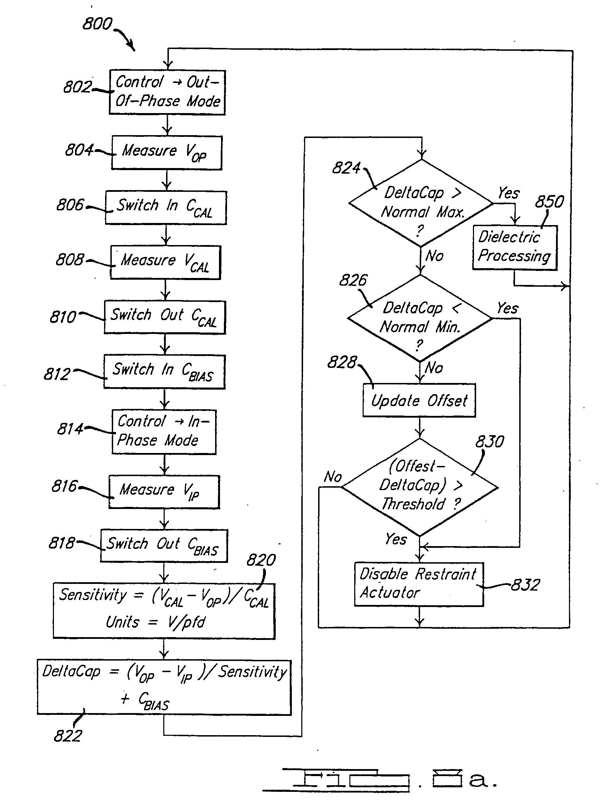

Fig. 6 illustrates a comparison of the simulation results for the **in-phase capacitance $C_{IP}$** and **out-of-phase capacitance $C_{OP}$** as a function of the distance to a relatively large conductive sheet target. The **out-of-phase capacitance $C_{OP}$** is larger, but is practically level after 4 inches. The **in-phase capacitance $C_{IP}$** is much smaller, but almost equals the **out-of-phase capacitance $C_{OP}$** for close-in targets. The difference **$C_{OP}$ - $C_{IP}$** (hereinafter referred to as **"DeltaCap")** decreases as the target becomes closer.

Accordingly, **DeltaCap** provides a measure of target distance, and by using this measure, this also provides a means for compensating for offsets that are common to both the in-phase (IP) and out-of-phase (OP) measurements, because switching the sensor from in-phase (IP) to out-of-phase (OP) modes principally affects the fields around the **proximity sensor 10,** and offsets in the associated **first circuit 42** common to both measurements are cancelled during the calculation of **DeltaCap.**

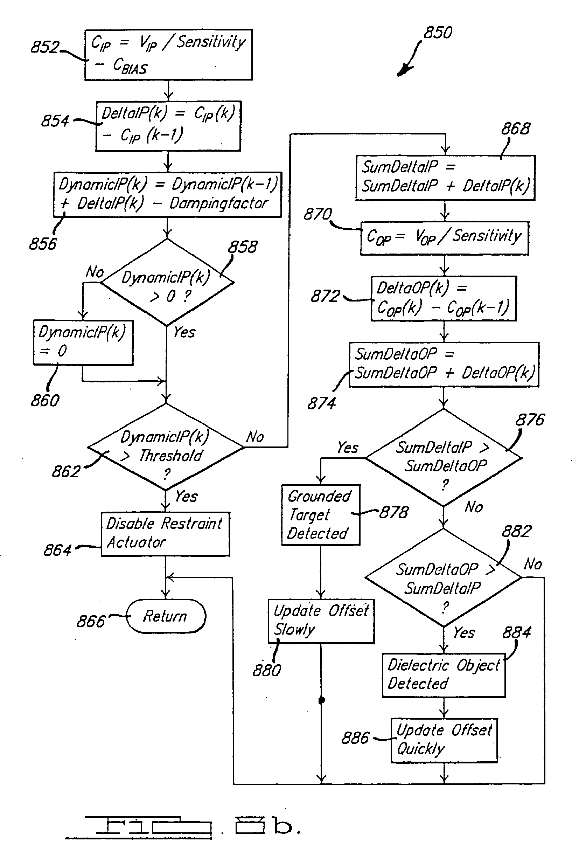

Whereas the means measuring capacitance by the **first circuit 42** provides a voltage that is roughly linear with the sensor capacitance, there are, however, a number of associated gain factors in the **first circuit 42** are susceptible to drift. Referring to **Figs. 7a**-f, a switchable **calibration capacitor $C_{CAL}$** can be used to compensate for this drift, and to provide a sensitivity factor in units of V/pF that can be used to calibrate the system.

Operatively coupling a relatively small (e.g. 1 pF or less) capacitance can be subject to error, depending upon the associated switching arrangement. For example, in **Figs. 7a-b,** one terminal of the **calibration capacitor $C_{CAL}$** is connected to the **first node 48,** and the other terminal thereof is connected to ground through a **switch S1.** Referring to **Fig. 7b,** whereas this configuration is satisfactory when the **switch S1** is closed, referring to **Fig. 7a,** when the switch is opened the capacitance of the **switch S1** is typically larger than that of the **calibration capacitor $C_{CAL}$.** For example, a typical FET may have an OFF capacitance of **40** pF, so that if the **calibration capacitor $C_{CAL}$** is **1** pF, then the series combination is **0.98** pF, which means that the **calibration capacitor $C_{CAL}$** is effectively never switched out of the circuit by **the switch S1.**

Referring to **Figs. 1a** and **7c-f, a first terminal 72** of a **first switch S1** is operatively coupled to a **first terminal 74** of a **second switch S2** at a **second node 76,** and a first **terminal 78** of a **capacitor $C_{CAL}$** is operatively coupled to the **second node 76.** A **second terminal 80** of the **second switch S2** is operatively coupled to a **first input 82** of an **operational amplifier 84.** Referring to **Figs 7c-d,** a **second terminal 86** of the capacitor $C_{CAL}$ is operatively coupled to a **second input 88** of the **operational amplifier 84** and a **second terminal 90** of the **first switch S1** is operatively coupled to a **circuit ground 92.** Referring to **Figs. 7e-f** the **second terminal 90** of the **first switch S1** is operatively coupled to the second input 88 of the operational amplifier 84 and the second terminal **86** of the **capacitor $C_{CAL}$** is operatively coupled to the **circuit ground 92.**

Referring to **Figs. 7d** and **7f,** when the **first switch S1** is closed and the **second switch S2** is open, one side of **capacitor $C_{CAL}$** is pulled to ground and the **capacitor $C_{CAL}$** is operatively coupled to the **second node 76,** so as to add the **capacitance $C_{CAL}$** thereto. Referring to **Figs. 7c** and **7e,** when the **first switch S1** is opened and the **second switch S2** is closed, one terminal of the **capacitor $C_{CAL}$** is driven by a buffered version of the signal on the other terminal of the **capacitor $C_{CAL}$** as a result of the property of the **operational amplifier 84** to substantially null a potential difference between the associated **first 82** and **second 88** inputs thereof. To the extent that these signals have identical voltages, there is substantially no current flowing through the **capacitor $C_{CAL}$** and the **capacitor $C_{CAL}$** is effectively switched out.

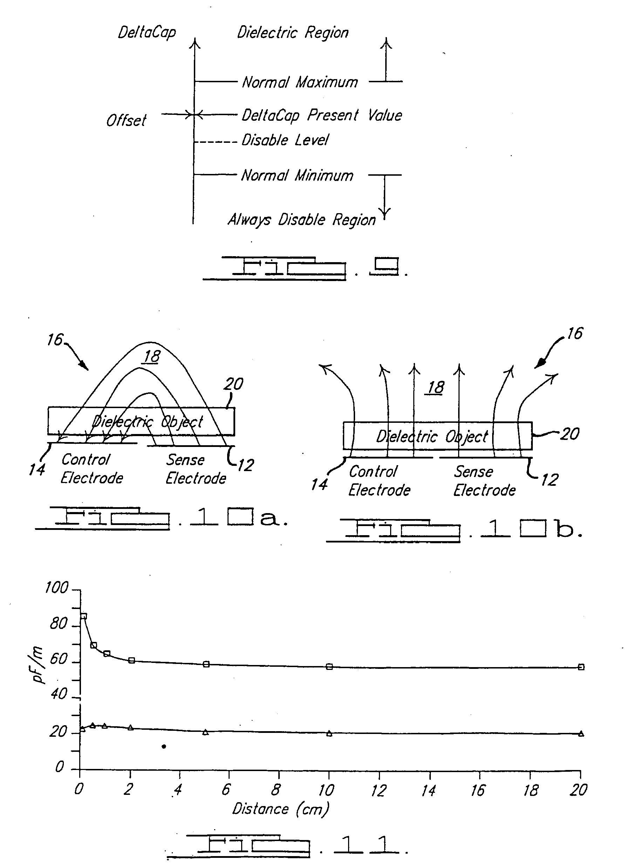

Referring to **Fig. 8a,** illustrating an example of an algorithm **(800)** to detect the proximity of an object to **a**

**proximity sensor 10,** in step **(802)** the **second oscillatory signal 30** is switched to the out-of-phase (OP) mode by the **control electrode driver 32** and the **control electrodes 14.1, 14.2 and 14.3** are driven with an out-of-phase (OP) signal. In step **(804)** the associated **third signal 50** ($V_{OP}$) is measured by the **first circuit 42**. Then in step **(806),** the calibration capacitor $C_{CAL}$ is operatively coupled to the first **node 48** by activating **FET transistor Q1a** and deactivating **FET transistor Q2a,** and in step **(808)** the associated **fifth signal 94** ($V_{CAL}$) is measured by the **first circuit 42,** after which in step **(810)** the **calibration capacitor $C_{CAL}$** is decoupled from the **first node 48** by deactivating **FET** transistor **Q1a** and activating **FET** transistor **Q2a.** In step **(812),** the **bias capacitor $C_{BIAS}$** is operatively coupled the **first node 48** by activating **FET transistor Q1b** and deactivating **FET transistor Q2b,** and in step **(814)** the second **oscillatory signal 30** is switched to the in-phase (IP) mode by the control **electrode driver** 32 and the **control electrodes 14.1, 14.2 and 14.3** are driven with an in-phase (IP) signal. In step **(816)** the associated **fourth signal 52 ($V_{IP}$)** is measured by the **first circuit 42,** after which in step **(818),** the **bias capacitor $C_{BIAS}$** is decoupled from the **first node 48** by deactivating **FET transistor Q1b** and activating **FET transistor Q2b.**

In step **(820),** a sensitivity factor for calibrating the first circuit 42 is calculated, in units of Volts per unit of capacitance, for example V/pF, as follows:

$$\text{Sensitivity} = (V_{CAL} - V_{OP}) / C_{CAL}$$

In step **(822),** the **DeltaCap** measure is calculated using this sensitivity factor, a follows:

$$\text{DeltaCap} = (V_{OP} - V_{IP}) / \text{Sensitivity} + C_{BIAS}$$

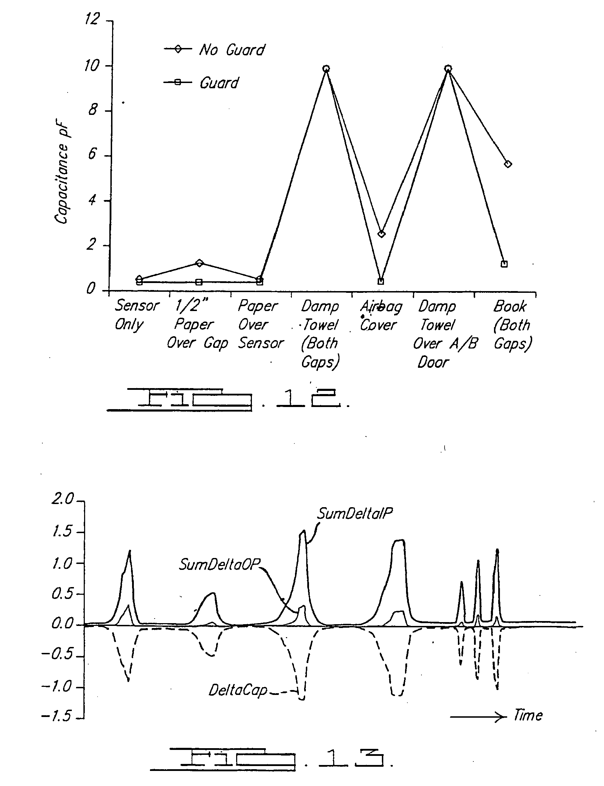

When no objects are present, the **DeltaCap** measure is maintained within a range by the above described calibration process. Referring to **Fig. 9,** illustrating a one-dimensional plot of the **DeltaCap** measure, should the **DeltaCap** measure drop below the normal minimum, into the "always disable" region, this would indicate the presence of a target in the sensing region. For example, with the **proximity sensor 10** used to detect an object proximate to a **restraint actuator 96** of a safety restraint system, this would indicate that the **restraint actuator 96,** for example and air bag inflator, should be disabled so at to prevent injury to an occupant proximate thereto as a result of the deployment thereof. When the **DeltaCap** measure is in the normal region, a long term average of the **DeltaCap** measure is calculated, and is referred to herein as the **offset.** If the the **DeltaCap** measure drifts slowly due to temperature or time, the offset slowly tracks these changes. If the **DeltaCap** measure drops quickly by a given threshold amount below the **offset,** this would indicate the presence of a target proximate to the proximity sensor 10 so that the restraint actuator 96 would be disabled. However, over time the offset would adjust down and the **restraint actuator 96** would become re-enabled. The **DeltaCap** measure is allowed to drift within the normal region and is slowly tracked by the **offset.** For small changes in the **DeltaCap** measure (for example as a result of far targets), a threshold below the present **offset** is used for disabling the **restraint actuator 96.** As a target moves close to the **proximity sensor 10** and the **DeltaCap** measure decreases significantly, the **DeltaCap** measure enters the "always disable" region. When the **DeltaCap** measure is in the "always disable" region, the **offset** is not updated.

A special condition is when a large dielectric object is placed on the **proximity sensor 10,** or if the **proximity sensor 10** is sprayed with water, wheren the **DeltaCap** measure may be shifted up, which is opposite to the change caused by a grounded target. If the **DeltaCap** measure is above the normal maximum, then special techniques are necessary for detecting targets, as described hereinbelow.

Returning to **Fig. 8a,** in step **(824),** if the **DeltaCap** measure exceeds the normal maximum, then in step **(850)** a dielectric processing algorithm is called as will be described hereinbelow in conjunction with **Fig. 8b.** Otherwise, if in step **(826)** the **DeltaCap** measure is less than the normal minimum, then the **restraint actuator 96** is disabled in step **(832)** and the process repeats with step **(802).** Otherwise from step **(826)** the **offset,** for example a running average of the **DeltaCap** measure, is updated in step **(828)** and if in step **(830)** the **offset** exceeds the **DeltaCap** measure by more than a threhsold, the **restraint actuator 96** is disabled in step **(832)** and the process repeats with step (802). Otherwise, from step **(830),** the process repeats with step **(802).**

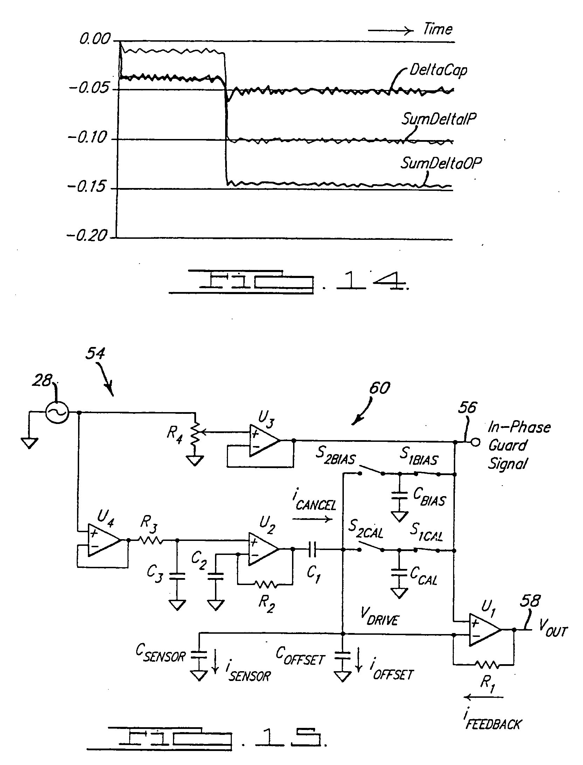

The **DeltaCap** measure provides a difference between an out-of-phase (OP) capacitance and an in-phase (IP) capacitance, which inherently reduce drifts because any common-mode effects in the **first circuit 42** are substantially cancelled by the differencing process. However, one undesirable side-effect of the **DeltaCap** measure is an is an increased sensitivity to dielectric objects. Referring to **Figs. 10a-b,** the out-of-phase (OP) capacitance of **Fig. 10a** is increased more than the in-phase (IP) capacitance of **Fig. 10b** for dielectric objects close to the sensor. The capacitance is increased by the dielectric object in proportion to the amount of the electric field in the dielectric and the dielectric constant of the object. In the out-of-phase (OP) mode, the fields are contained close to the electrode surface and so more of the electric field travels through the dielectric object. In the in-phase (IP) mode, the fields pass through the dielectric, but most of the field is in air, resulting in only a marginal increase of capacitance.

The principal manifestation of this effect is from thick dielectric objects relatively close to the **proximity sensor 10,** such as from books or from water on the **proximity sensor 10.** Typically, one section of newspaper is not enough to increase the **DeltaCap** measure. A dielectric object tends to increase the **DeltaCap** measure, which is the opposite to the effect of a person who is typically grounded, so the sensor would not normally cause the **restraint actuator 96** to disable as a result of the presence of such an object.

This problem is mitigated by either 1) using an in-phase guard band around the sensor, 2) using the change in the in-phase (IP) capacitance as a back up measure for disabling the **restraint actuator 96,** or 3) using the changes in the in-phase (IP) and out-of-phase (OP) capacitances to deduce that a dielectric object is present and then rapidly updating the **offset.**

Referring to **Fig. 1a, a proximity sensor 10** is illustrated with three **control electrodes 14.1, 14.2** and **14.3** and a **guard 98** around the **sense electrode 12.** This is just and example one possible arrangement. The arrangement of the electrodes can generally be adapted in accordance with constraints of the **region 18** to be sensed. As was illustrated in **Fig. 5,** the charge distribution for the out-of-phase (OP) mode has relatively high peaks at the edges. When the dielectric increases the capacitance of the **sense electrode 12,** the bulk of the extra charge travels to the edges of the **sense electrode 12.** The **guard 98** is driven in-phase (IP) with the sensor, causing this extra charge to be on the guard, but because the guard is not electrically connected to the **sense electrode 12,** this charge is not measured. Accordingly, the guard reduces the effect of dielectrics on the out-of-phase (OP) capacitance of the **sense electrode 12.**

**Fig. 11** illustrates the results of a simulation in which a 5 mm dielectric having a relative permittivity of 3 is placed at various distances. The guard reduces both the out-of-phase (OP) capacitance and the sensitivity to dielectrics. The effect of the dielectric is noticeable primarily within a short range, for example less than 3 inches.

**Fig. 12** illustrates actual test data in which various dielectric objects are placed on a sensor, with and without the guard. The guard reduces the effect of these objects, except for the wet towel cases. Wet towels are particularly difficult because they are conductive as well as having a large dielectric constant.

A second technique of mitigating dielectric effects is to consider only the in-phase (IP) capacitance, since the in-phase (IP) capacitance is not drastically affected by dielectrics. When a target approaches the sensor, the in-phase (IP) capacitance increases. Although the absolute value of the in-phase (IP) capacitance is not reliable, the change therein over time can be calculated.

A measure referred to as **DeltaIP** is calculated and used to calculate a measure called **DynamicIP** which this tracks the change of the in-phase capacitance, as follows:

$$\text{DeltaIP (k)} = C_{IP}(k) - C_{IP}(k-1)$$

$$\text{DynamicIP (k)} = \text{DynamicIP (k-1)} + \text{DeltaIP (k)} - \text{dampingfactor}$$

$$(\text{DynamicIP must be} >= 0)$$

As an example, if the **DeltaCap** measure is increased above the **offset,** the system is still be able to disable for a target moving into the danger zone by checking if the **DynamicIP** measure is greater than a threshold. This works even if a large book is over the sensor, but principally works for moving targets.

The third technique for mitigating the effect of dielectrics and water is to monitor the changes in the in-phase (IP) and out-of-phase (OP) capacitances and use that information to categorize the situation. Then, if necessary, the **offset** can be quickly updated. For example, grounded targets increase the in-phase (IP) capacitance more than the out-of-phase (OP) capacitance, while dielectric objects increase the out-of-phase (OP) capacitance more than in-phase (IP) capacitance.

**Fig. 13** illustrates a grounded target moving closer to and farther away from the **proximity sensor 10. Fig. 14** illustrates a dielectric (i.e. a magazine) moving away from the **proximity sensor 10.** For both a grounded target moving towards the sensor and for a dielectric object moving away from the sensor, the **DeltaCap** measure decreases, But for the grounded target case, most of the change is due to the in-phase (IP) capacitance, while for the dielectric case the out-of-phase (OP) change is greater than the in-phase (IP) change. If these cases can be separated, then the offset can be quickly updated for the dielectric case and slowly updated for the target case.

Referring to **Fig. 8b**, illustrating a dielectric processing algorithm **(850),** in step **(852)** an **in-phase capacitance $C_{IP}$** is calculated from the **fourth signal 52 ($V_{IP}$)** and the sensitivity factor as follows:

$$C_{IP} = V_{IP} / \text{Sensitivity} - C_{BIAS}$$

In step **(854)** a **DeltaIP** measure is calculated from the change in **in-phase capacitance $C_{IP}$** over time, as follows:

$$\text{DeltaIP (k)} = C_{IP} (k) - C_{IP} (k-1)$$

In step **(856)** a **DynamicIP** measure is calculated using a damping factor, as follows:

$$\text{DynamicIP (k)} = \text{DynamicIP (k-1)} + \text{DeltaIP (k)} - \text{damping\_factor}$$

If in step **(858)** the **DynamicIP** measure is less than zero, then in step **(860)** the present value of the **DynamicIP** measure is set to zero. Otherwise, if in step **(862)** the **DynamicIP** measure is greater than a threshold, then in step **(864)** the **restraint actuator 96** is disabled and in step **(866)** the process returns to step **(802).** Otherwise from step **(862),** in step **(868)** a **SumDeltaIP** measure is calculated as a running sum of the **DeltaIP** measures over time. In step **(870),** an **out-of-phase capacitance $C_{OP}$** is calculated from the **third signal 50 ($V_{OP}$)** and the sensitivity factor as follows:

$$C_{oP} = V_{oP} / \text{Sensitivity}$$

In step **(872)** a **DeltaOP** measure is calculated from the change in **out-of-phase capacitance $C_{OP}$** over time, as follows:

$$\text{DeltaOP (k)} = C_{OP} (k) - C_{OP} (k-1)$$

In **step (874)** a **SumDeltaOP** measure is calculated as a running sum of the **DeltaOP** measures over time. If in step **(876)** the **SumDeltaIP** measure is greater than the **SumDeltaOP** measure, then in step **(878)** a grounded target is assumed to be present, and in step **(880)** the **offset** is continued to be updated slowly, after which in step **(866)** the process returns to step **(802).** Otherwise from step **(876),** if in step **(882)** the **SumDeltaOP** measure is greater than the **SumDeltaIP** measure, then in step **(884)** a dielectric object is assumed to be present, and in step **(886)** the **offset** is updated quickly, after which in step **(866)** the process returns to step **(802).**

**Fig. 15** illustrates a schematic of the **front end amplifier 54,** comprising an **amplifier $U_1$** and a **offset canceller $U_2$,** and the associated calibration and bias capacitor circuitry.

The **amplifier $U_1$** can be understood as a current to voltage converter. The non-inverting input is driven with a sinusoid and because of the properties of the op-amp the same voltage is present on the inverting input. The signal on the inverting input drives the sensor electrode and a AC current flows out of the sensor. This same current flows through the **feedback resistor $R_1$** and this generates the change in the output.

The circuit can also be understood as a non-inverting amplifier with a transfer function of:

$$\text{Vout} = V+ (1 + j\omega RC)$$

This circuit has the following properties:

1. If there is no capacitance then the output is the same as the drive signal on the non-inverting input (i.e. it is a voltage follower).

2. As the capacitance of the sensor increases, the output voltage increases and also starts to go out of phase with the drive voltage.

3. The change in output voltage is linearly related to the frequency of the drive signal, the size of the **feedback resistor R₁,** and the magnitude of the drive voltage, and the change in the capacitance.

4. If there is a large offset capacitance, then the gain must be low or the output voltage will be saturated. Accordingly, an offset canceling circuit is incorporated to prevent this problem.

5. The circuit stops working well above about 100KHz because the op-amps begin to become non-ideal. The circuit requires that the feedback current is such that the inverting input is kept at the same voltage as the non-inverting input.

The following design considerations can be used in configuring the **first circuit 42:**

1. Higher operating frequencies provide for higher associated current to the **sense electrode 12,** but the frequency is preferably limited to that range for which the performance of the operational amplifier remains reasonably ideal.

2. The size of the drive signal is preferably as large as possible for increased signal-to-noise ratio, but is preferably not so large as to saturate or rail output voltage the measure of capacitance increases. Generally, both noise currents and signal currents are amplified, so it is desireable to make the signal currents as large as possible.

3. The **feedback resistor R₁** can be set to provide the desired sensitivity. The change in output voltage due a change in capacitance is:

$$\Delta Vout(dc) = \alpha \times \omega \times R_1 \times Vdrive(peak) \times Gain(dc) \times \Delta Capacitance$$

where $\alpha$ is dependent on the circuit capacitance but is usually 0.7-0.9. For example, if it is desired to have a 40mV output change for a 0.01pf change in capacitance then with

$$\alpha = 0.8, \omega = 6.28 \times 10^5, Vdrive(peak) = 1V, Gain(dc) = 20, \Delta Capacitance = 10^{-14}$$

$$R_1 = .04/(0.8 \times 6.28^5 \times 1 \times 20 \times 10^{-14}) = 398K\Omega$$

The remainder of the circuit is used to adjust the current going in and out of the inverting input node. A large offset capacitance can cause a large offset current which can saturate the output voltage at the desired gain level. These offset capacitances can come from the circuit, or the wire going to the sensor, or the back side of the sensor. **Amplifier U₂** is designed to generate a signal which is in-phase with the sensor drive signal (inverting input). If the output of **U₂** is made larger, it will inject current that cancels some of this offset current. **Buffer amplifiers U₃** and **U₄** allow the drive to **amplifier U₂** and to **amplifier U₁** to be adjusted in amplitude while staying in phase.

It will be understood by one of ordinary skill in the art that the means for controlling the state of the second oscillatory signal, the means for measuring the response signal from first electrode, the means for means for forming a difference of the third and fourth signals, the means for calibrating the difference, and the means for generating a measure of proximity of an object to the proximity sensor can be accomplished by various analog or digital circuits or by software using a computer, for example a microprocessor.

It should be understood that the **first oscillatory signal 26** in general need not be either sinusoidal or periodic. Generally, an in-phase signal corresponding to the **second state 40** undergoes similar transitions to the **first oscillatory signal 26,** and an out-of-phase signal corresponding to the **first state 38** undergoes substantially opposite transitions to that of the **first oscillatory signal 26.** Whereas the **signal generator 28** is illustrated herein as a sinusoidal oscillator, other types of signal generators 28 can be used, for example a logic circuit. The DC bias to the **second oscillatory**

signal 30 can be either the same or different for different states 36.

The proximity sensor 10 can be used in a variety of applications, for example in a vehicle for detecting the proximity of an occupant to an air bag inflator so that the air bag inflator can be disabled if the occupant becomes located within an at-risk region proximate to the air bag inflator. For example, the proximity sensor can be located in a seat, in the instrument panel, in a cover to the air bag inflator, or in the steering wheel. The proximity sensor 10 may also be used for other proximity sensing applications.

While specific embodiments have been described in detail, those with ordinary skill in the art will appreciate that various modifications and alternatives to those details could be developed in light of the overall teachings of the disclosure. Accordingly, the particular arrangements disclosed are meant to be illustrative only and not limiting as to the scope of the invention, which is to be given the full breadth of the appended claims and any and all equivalents thereof.

**Claims**

1.  A method of operatively coupling adding capacitance to an input of an operational amplifier, comprising:

    a. operatively coupling a first terminal of a first switch to a first terminal of a second switch at a second node;
    b. operatively coupling a first terminal of a capacitor to said second node;
    c. operatively coupling a second terminal-of said second switch to a first input of an operational amplifier;
    d. operatively coupling one of a second terminal of said capacitor and a second terminal of said first switch to a second input of said operational amplifier; whereby said operational amplifier acts to substantially null a potential difference between said first and second inputs, and
    e. operatively coupling the other of said second terminal of said capacitor and said second terminal of said first switch to a circuit ground, wherein said capacitor has a capacitance between said first and second terminals of said capacitor, when said first switch is closed and said second switch is open, said capacitance is added to said second input of said operational amplifier, and when said first switch is open and said second switch is closed, said capacitance is not added to said second input of said operational amplifier.

2.  A method of operatively coupling adding capacitance to an input of an operational amplifier as recited in claim 1, wherein said first and second switches comprise field effect transistors.

3.  A method of operatively coupling adding capacitance to an input of an operational amplifier as recited in claim 1, wherein said second terminal of said capacitor is operatively coupled to said second input of said operational amplifier and said second terminal of said first switch is operatively coupled to said circuit ground.

4.  A method of operatively coupling adding capacitance to an input of an operational amplifier as recited in claim 1, wherein said second terminal of said first switch is operatively coupled to said second input of said operational amplifier and said second terminal of said capacitor is operatively coupled to said circuit ground.

FIG. 1a.

12
14

| Control | Sense Electrode | Guard | Control Electrode | | |
|---|---|---|---|---|---|
| | | | Left | Bottom | Right |
| In–Phase | + | ///// | + | + | + |
| | + | + | + | + | + |
| Out–Of–Phase | + | ///// | − | − | − |
| | + | + | − | − | − |

40

38

36

**FIG. 1b.**

**FIG. 5.**

Target Distance (Inches)

Capacitance (pF)

OP
IP
OP–IP

FIG. 2.

FIG. 3.

FIG. 4.

FIG. 5.

FIG. 7a.

FIG. 7b.

FIG. 7c.

FIG. 7d.

FIG. 7e.

FIG. 7f.

FIG. 8a.

$$C_{IP} = V_{IP} / Sensitivity - C_{BIAS}$$ — 852

$$DeltaIP(k) = C_{IP}(k) - C_{IP}(k-1)$$ — 854

$$DynamicIP(k) = DynamicIP(k-1) + DeltaIP(k) - Dampingfactor$$ — 856

DynamicIP(k) > 0 ? — 858

DynamicIP(k) = 0 — 860

DynamicIP(k) > Threshold ? — 862

Disable Restraint Actuator — 864

Return — 866

SumDeltaIP = SumDeltaIP + DeltaIP(k) — 868

$$C_{OP} = V_{OP} / Sensitivity$$ — 870

$$DeltaOP(k) = C_{OP}(k) - C_{OP}(k-1)$$ — 872

SumDeltaOP = SumDeltaOP + DeltaOP(k) — 874

SumDeltaIP > SumDeltaOP ? — 876

Grounded Target Detected — 878

Update Offset Slowly — 880

SumDeltaOP > SumDeltaIP ? — 882

Dielectric Object Detected — 884

Update Offset Quickly — 886

850

FIG. 8b.

17

DeltaCap    Dielectric Region

———— Normal Maximum ————

Offset ————→ ———— DeltaCap Present Value

|————— Disable Level

———— Normal Minimum ————

Always Disable Region

**FIG. 9.**

16    18    20
Dielectric Object
14    Control        Sense    12
     Electrode      Electrode

**FIG. 10a.**

16    18    20
Dielectric Object
14    Control        Sense    12
     Electrode      Electrode

**FIG. 10b.**

100
80
60
pF/m
40
20
0
    0    2    4    6    8    10    12    14    16    18    20
                    Distance (cm)

**FIG. 11.**

FIG. 12.

FIG. 13.

0.00

────→ Time

DeltaCap

−0.05

SumDeltaIP

−0.10

SumDeltaOP

−0.15

−0.20

FIG. 14.

FIG. 15.

20

**European Patent Office**

**EUROPEAN SEARCH REPORT**

Application Number

EP 06 00 5246

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 3 716 800 A (DI ROCCO J) 13 February 1973 (1973-02-13) * column 2, line 3 - line 56; figures 1,2 * | 1,2,4 | INV. G01V3/08 |
| X | US 4 276 513 A (JOHNSTON CRAIG E ET AL) 30 June 1981 (1981-06-30) * column 4, line 49 - column 5, line 68; figures 1,2 * | 1-3 | |

TECHNICAL FIELDS
SEARCHED       (IPC)

G01V
H03K
B60R
G11C
H03F

The present search report has been drawn up for all claims

| Place of search | Date of completion of the search | Examiner |
|---|---|---|
| The Hague | 18 April 2006 | Häusser, T |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

**EP 1 666 922 A1**

## ANNEX TO THE EUROPEAN SEARCH REPORT
## ON EUROPEAN PATENT APPLICATION NO.

EP 06 00 5246

This annex lists the patent family members relating to the patent documents cited in the above-mentioned European search report.
The members are as contained in the European Patent Office EDP file on
The European Patent Office is in no way liable for these particulars which are merely given for the purpose of information.

18-04-2006

| Patent document cited in search report | | Publication date | Patent family member(s) | | Publication date |
|---|---|---|---|---|---|
| US 3716800 | A | 13-02-1973 | NONE | | |
| US 4276513 | A | 30-06-1981 | CA | 1144244 A1 | 05-04-1983 |
| | | | DE | 3064945 D1 | 27-10-1983 |
| | | | EP | 0025680 A1 | 25-03-1981 |
| | | | JP | 1628417 C | 20-12-1991 |
| | | | JP | 2052223 B | 09-11-1990 |
| | | | JP | 56047766 A | 30-04-1981 |

EPO FORM P0459

For more details about this annex : see Official Journal of the European Patent Office, No. 12/82